# EUROPÄISCHE PATENTANMELDUNG

(11) **EP 1 184 587 A1**
(43) Veröffentlichungstag der Anmeldung: **06.03.2002**
(21) Anmeldenummer: 01115242.8
(22) Anmeldetag: 23.06.2001
(51) Int. Cl.: F16D 41/06

(54) **Freilauf**

(30) Priorität: 31.08.2000 DE 20015034 U
(71) Anmelder: Schwarzbich, Jörg, 33615 Bielefeld (DE)
(72) Erfinder: Schwarzbich, Jörg, 33615 Bielefeld (DE)
(74) Vertreter: TER MEER STEINMEISTER & PARTNER GbR

(57) **Zusammenfassung**

Freilauf mit in einem Käfig (12) gehaltenen Wälzkörpern (14) und einer den Käfig umgebenden Hülse (10), die eine Klemmkontur (16) für die Wälzkörper (14) bildet, dadurch **gekennzeichnet,** daß die Hülse (10) aus einem ursprünglich flachen und dann in die hohlzylindrische Form der Hülse (10) gebogenen Band (20) hergestellt ist, dessen entgegengesetzte Enden an der Nahtstelle (22) der Hülse (10) auf Stoß aneinander liegen.

## Beschreibung

Die Erfindung betrifft einen Freilauf mit in einem Käfig gehaltenen Wälzkörpern und einer den Käfig umgebenden Hülse, die eine Klemmkontur für die Wälzkörper bildet.

Ein solcher Freilauf dient dazu, eine durch den Käfig verlaufende Welle mit Hilfe der Wälzkörper so zu lagern, daß sie in einer Richtung reibungsarm drehbar ist, bei einer Drehung in Gegenrichtung jedoch relativ zu der Hülse blockiert wird. Dieses Blockieren wird dadurch erreicht, daß bei dieser Drehrichtung die am Umfang der Welle abrollenden Wälzkörper auf die Klemmkontur der Hülse auflaufen und dann ein Weiterdrehen der Welle verhindern.

Typisches Anwendungsbeispiel eines solchen Freilaufes ist die Hinterradnabe eines Fahrrads. Daneben werden solche Freiläufe jedoch auch in der Kraftfahrzeugtechnik eingesetzt, beispielsweise als selbsttätiges Nachspannelement in Kabelzügen oder auch als Blockierglied in Einrichtungen zur Erhöhung der Sicherheit bei einem Aufprall, beispielsweise bei aktiven Kopfstützen, die durch die bei einem Aufprall des Fahrzeugs auftretenden Trägheitskräfte in eine wirksame Position verschwenkt werden und dann durch den Freilauf selbsthemmend in der wirksamen Position blockiert werden. Bei dem letztgenannten Anwendungsfall besteht die Besonderheit, daß der Freilauf seine Funktion nur einmal, nämlich bei einem Aufprall auszuführen braucht und bei diesem Aufprall zerstört werden kann oder gar zerstört werden soll, um einen Teil der Aufprallenergie aufzuzehren.

Bei einem herkömmlichen Freilauf besteht die Hülse aus einem Stahlrohr, an dessen innerer Umfangsfläche die Klemmkonturen für die einzelnen Wälzkörper in relativ aufwendiger Weise hergestellt werden müssen. Der Käfig ist zumeist ein einstückiges Kunststoffteil, das die Form einer zu einem Ring geschlossenen Sprossenleiter hat, wobei die Wälzkörper, beispielsweise Rollen oder Nadeln, zwischen den einzelnen Leitersprossen gehalten sind. auch dieses Kunststoffteil ist werkzeugtechnisch schwierie herzustellen. Häufig ist jeder Nadel eine Feder zugeordnet, die diese Nadel elastisch in Klemmrichtung vorspannt. Diese Federn werden bisher zumeist durch geeignet gebogene Federstahlbänder gebildet, die nachträglich in einem relativ aufwendigen Verfahren in den Käfig eingesetzt werden müssen.

Aufgabe der Erfindung ist es, einen Freilauf zu schaffen, der zu geringeren Kosten hergestellt werden kann.

Diese Aufgabe wird erfindungsgemäß mit den in den unabhängigen Schutzansprüchen angegebenen Merkmalen gelöst.

Ein Lösungsmerkmal besteht darin, daß die Hülse aus einem ursprünglich flachen und dann in die hohlzylindrische Form der Hülse gebogenen Band hergestellt ist, dessen entgegengesetzte Enden an der Nahtstelle der Hülse auf Stoß aneinander liegen.

Diese Lösung bietet die Möglichkeit, die Klemmkonturen für die Wälzkörper in rationeller und kostengünstiger Weise durch Walzen oder Pressen an dem flachen Band herzustellen, bevor dieses zu der hohlzylindrischen Hülse geschlossen wird. Hierdurch wird eine bedeutende Senkung der Herstellungskosten ermöglicht.

Durch den Käfig, der eng von der Hülse umschlossen wird, kann dabei die Hülse in ihrer hohlzylindrischen Form stabilisiert werden. In vielen praktischen Anwendungsfällen wird die Hülse ohnehin in ein Gehäuse eingepreßt, so daß sich die Enden des Bandes an der Nahtstelle der Hülse auch dann nicht auseinander drücken lassen, wenn radial auswärts gerichtete Kräfte auf die Hülse einwirken. Erforderlichenfalls kann jedoch die Zugfestigkeit der Hülse dadurch verbessert werden, daß die Enden des Bandes durch zueinander komplementäre Eingriffskonturen zusammengehalten werden.

Gemäß einem weiteren Lösungsmerkmal besteht der Käfig aus zwei getrennten Kunststoff-Formteilen, die von entgegengesetzten Enden her in die Hülse einrastbar sind.

Diese Bauweise ermöglicht nicht nur ein vereinfachtes einrasten des Käfigs in die Hülse, sondern hat darüber hinaus den Vorteil, daß der Aufbau des Formwerkzeugs für den Käfig erheblich vereinfacht wird. Das liegt vor allem daran, daß die beiden Hälften des Käfigs, die jeweils aus einem Holm und je einer Hälfte der zugehörigen Sprossen der "Sprossenleiter" bestehen, sich anders als bei dem herkömmlichen einteiligen Käfig in Axialrichtung des Käfigs entformen lassen.

Die Verrastung der beiden Hälften des Käfigs kann in besonders einfacher Weise durch an den Käfig angeformte Rastnocken erreicht werden, die in entsprechende fensterartige Aussparungen der Hülse einrasten. Durch den Eingriff der Rastnocken in die fensterartigen Aussparungen wird dann zugleich die Winkelposition des Käfigs in bezug auf die Hülse so festgelegt, daß die in dem Käfig gehaltenen Wälzkörper lagerichtig zu den entsprechenden Klemmkonturen der Hülse angeordnet sind.

Eine zusätzliche Lagefixierung des Käfigs relativ zu der Hülse läßt sich dadurch erreichen, daß jede Hälfte des Käfigs am äußeren Ende einen Kranz radial vorspringender Nocken aufweist, die in entsprechende Kerben am Rand der Hülse eingreifen.

Gemäß einem weiteren Lösungsmerkmal sind die Federn, die die einzelnen Wälzkörper in Klemmrichtung vorspannen, in einem Stück an den aus Kunststoff hergestellten Käfig angeformt, so daß keine zusätzlichen Arbeitsschritte zum Herstellen und Einsetzen der Federn in den Käfig erforderlich sind.

All diese Lösungsmerkmale lassen sich in besonders vorteilhafter Weise miteinander kombinieren, ermöglichen jedoch auch unabhängig von einander eine deutliche Vereinfachung der Herstellung und Senkung der Herstellungskosten.

Bei der Kombination der genannten Lösungsmerkmale besteht die vorteilhafte Möglichkeit, die Kerben und fensterartigen Aussparungen der Hülse, die zur Lagefixierung des Käfigs dienen, ebenso wie die Eingriffskonturen an den Enden des Bandes durch Stanzen an dem flachen Band auszubilden, bevor dieses zu der hohlzylindrischen Hülse verformt wird.

Durch die einstückig an die beiden Hälften des Käfigs angeformten Federn wird die ursprüngliche Drehsymmetrie des Käfigs gebrochen, so daß zwischen einer linken und einer rechten Käfighälfte unterschieden werden muß. Um Verwechslungen bei der Montage zu vermeiden, ist es zweckmäßig, diese beiden Käfighälften aus unterschiedlich gefärbten Kunststoffen herzustellen.

Im folgenden wird ein Ausführungsbeispiel der Erfindung anhand der Zeichnungen näher erläutert.

### Es zeigen:

- Fig. 1: einen Querschnitt eines erfindungsgemäßen Freilaufes;
- Fig. 2: einen Schnitt durch den Freilauf entsprechend der Linie II - II in Fig. 1;
- Fig. 3: eine Seitenansicht des Freilaufes;
- Fig. 4: den Grundriß eines Bandes, das später zu der Hülse des Freilaufes gebogen wird;
- Fig. 5: einen vergrößerten Teilschnitt längs der Linie V - V in Fig. 4; und
- Fig. 6 und 7: vereinfachte Darstellungen eines Käfigs des Freilaufs, die an den Käfig angeformte Federn zum Vorspannen der Wälzkörper im unbelasteten und im belasteten Zustand illustrieren.

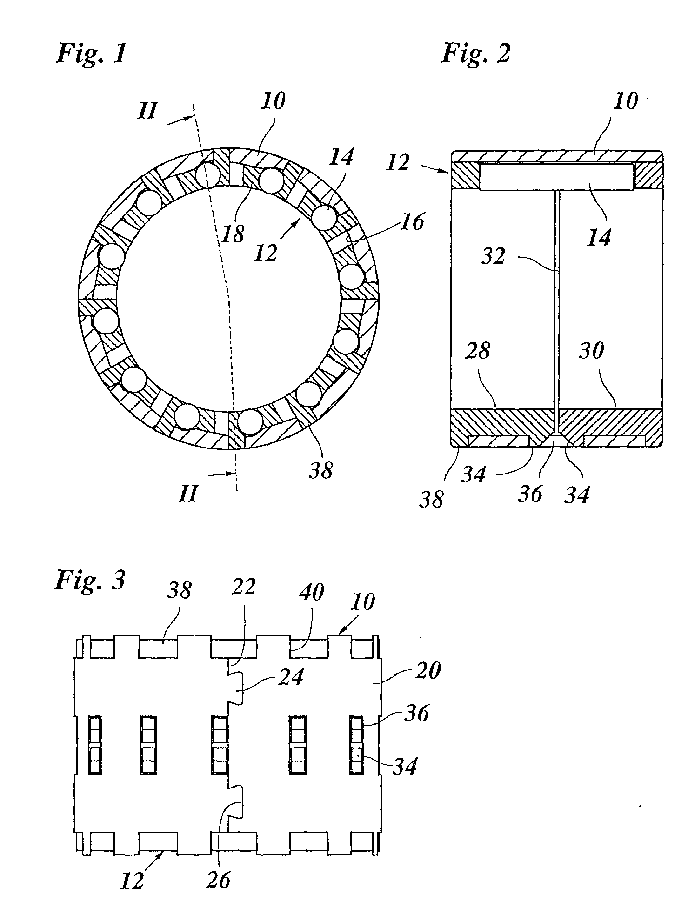

Der in Figuren 1 bis 3 gezeigte Freilauf weist eine hohlzylindrische Hülse 10 aus gehärtetem Stahl auf, die einen Käfig 12 eng umschließt. In dem Käfig 12 sind mehrere Wälzkörper gehalten, die im gezeigten Beispiel als zylindrische Rollen oder Nadeln 14 ausgebildet sind. Die Nadeln 14 können an der Außenfläche einer nicht gezeigten Welle abrollen, die axial durch den Käfig 12 verläuft. Jeder Nadel 14 ist eine rampenförmige Klemmkontur 16 zugeordnet, die an der inneren Umfangsfläche der Hülse 10 ausgebildet ist. Wenn die nicht gezeigte Welle in Uhrzeigerrichtung in Fig. 1 gedreht wird, so rollen die Nadeln 14 am Umfang der Welle ab, und sie bewegen sich ebenfalls in Uhrzeigerrichtung, so daß sie auf die rampenförmigen Klemmkonturen 16 auflaufen und sich zwischen der Hülse 10 und der Welle verklemmen und so die Welle blockieren. Dieser Effekt wird dadurch unterstützt, daß jede Nadel 14 durch einstückig an den Käfig 12 angeformte Federn 18 in Klemmrichtung vorgespannt ist. Wenn die Welle dagegen in Gegenuhrzeigerrichtung in Fig. 1 gedreht wird, so hat die Welle die Tendenz, die Nadeln 14 entgegen der Kraft der Federn 18 in dieser Richtung mitzunehmen. Die Nadeln werden dann jeweils in dem Bereich der zugehörigen Klemmkontur gehalten, in dem das größte Lichtmaß zwischen Welle und Hülse besteht, und somit wird der Drehung der Welle relativ zu der Hülse 10 kein Widerstand entgegengesetzt.

Wie aus Fig. 3 hervorgeht, ist die Hülse 10 aus einem ursprünglich flachen Band 20 hergestellt, das zu einem hohlzylindrischen Körper gebogen ist, so daß die entgegengesetzten Enden des Bandes unter Bildung einer Naht 22 auf Stoß aneinanderliegen. Die Enden des Bandes werden in diesem Zustand durch zueinander komplementäre schwalbenschwanzförmige Eingriffskonturen 24, 26 zusammengehalten.

Der Käfig 12 besteht gemäß Fig. 2 aus zwei getrennten Hälften 28, 30, die als Kunststoff-Formteile ausgebildet sind und die in Längsrichtung gesehen in der Mitte des Wälzlagers durch eine schmale Fuge 32 getrennt sind. Jeder Nadel 14 des Wälzlagers ist am inneren Ende jeder Hälfte 28, 30 des Käfigs ein Rastnocken 34 zugeordnet, und die einander gegenüberliegenden Rastnocken 34 der beiden Käfighälften greifen jeweils in eine gemeinsame fensterartige Aussparung 36 in der Mitte der Hülse 10 ein. Die Fuge 32 ist so bemessen, daß sie ein sicheres Einrasten der Rastnocken 34 in den Aussparungen 36 ermöglicht, wenn die beiden Hälften 28, 30 des Käfigs von entgegengesetzten Enden her in die Hülse 10 eingeclipst werden. Weiterhin hat jede der beiden Hälften 28, 30 des Käfigs 12 am äußeren, der Fuge 32 entgegengesetzten Ende einen Kranz nach außen vorspringender Nocken 38, die jeweils in eine zugehörige Kerbe 40 am Rand der Hülse 10 eingreifen. Auf diese Weise wird eine verdrehsichere Verbindung zwischen dem Käfig 12 und der Hülse 10 geschaffen.

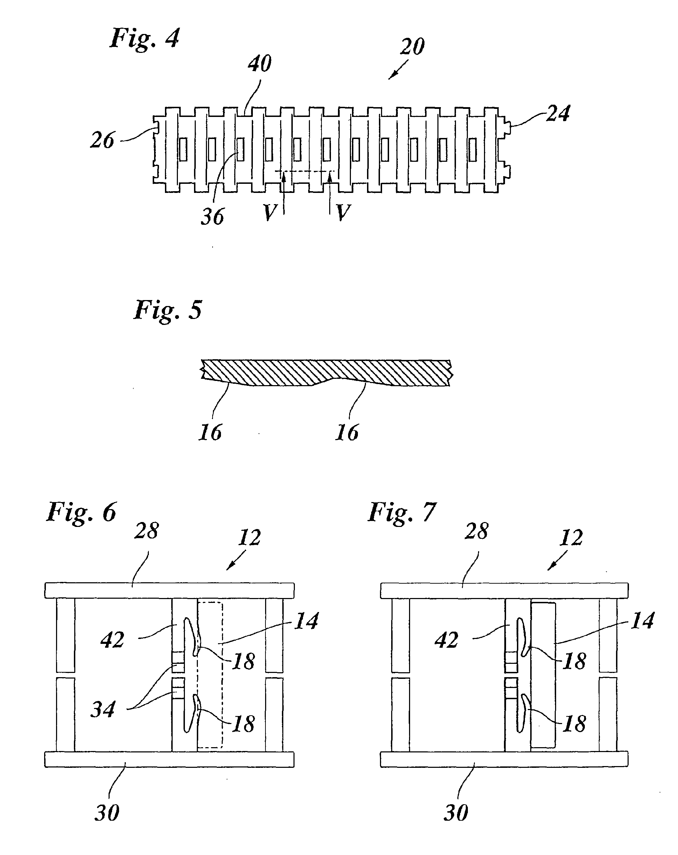

Fig. 4 zeigt einen Grundriß des Bandes 20, bevor es zu der Hülse 10 geschlossen wird. Dieses Band 20 kann zunächst als Endlosmaterial hergestellt werden, an dem dann auf einer Seite beispielsweise durch Walzen die Klemmkonturen 16 ausgebildet werden, die vergrößert in Fig. 5 dargestellt sind. In einem nachfolgenden Schritt wird dann das Band 20 mit der gewünschten Umrißform aus dem Endlosmaterial ausgestanzt, wobei zugleich die Eingriffkonturen 24, 26, die fensterartigen Aussparungen 36 und die Kerben 40 gebildet werden. Danach wird das Band 20 in einer Biegemaschine in die hohlzylindrische Form gemäß Fig. 3 gebracht, wobei die schwalbenschwanzförmigen Eingriffskonturen 24 in die dazu komplementären konkaven Eingriffskonturen 26 eingreifen, so daß die Enden des Bandes 20 auch dann fest zusammengehalten werden, wenn die erwähnte Welle unter Spannung in das Innere des Käfigs eingeführt wird und die Tendenz hat, die Hülse 10 radial aufzuweiten. Beim Ausstanzen des Bandes 20 ist natürlich dafür Sorge zu tragen, daß die Aussparungen 36 und die Kerben 40 in der richtigen Position relativ zu den Rastkonturen 16 gebildet werden.

In Figuren 6 und 7 sind die beiden Hälften 28, 30 des Käfigs 12 jeweils nur schematisch gezeigt. In fetteren Linien ist eine Sprosse 42 eingezeichnet, die je zur Hälfte an den beiden Hälften 28 und 30 des Käfigs 12 ausgebildet ist und die die Aufnahmen für zwei Nadeln 14 voneinander trennt. An dieser Sprosse 42 sind auch die beiden Rastnocken 34 ausgebildet, die in eine der fensterartigen Aussparungen 36 der Hülse 10 eingreifen. Weiterhin ist an jede Hälfte der Sprosse 42 einstückig eine der beiden Federn 18 angeformt, die die zugehörige Nadel 14 in Klemmrichtung vorspannen. Dabei zeigt Fig. 6 die Federn 18 im unbelasteten Zustand, während Fig. 7 die Federn 18 im elastisch verformten Zustand in Anlage an der zugehörigen Nadel 14 zeigt.

## Patentansprüche

1. Freilauf mit in einem Käfig (12) gehaltenen Wälzkörpem (14) und einer den Käfig umgebenden Hülse (10), die eine Klemmkontur (16) für die Wälzkörper (14) bildet, **dadurch gekennzeichnet, daß** die Hülse (10) aus einem ursprünglich flachen und dann in die hohlzylindrische Form der Hülse (10) gebogenen Band (20) hergestellt ist, dessen entgegengesetzte Enden an der Nahtstelle (22) der Hülse (10) auf Stoß aneinander liegen.

2. Freilauf nach Anspruch 1, **dadurch gekennzeichnet, daß** die entgegengesetzten Enden des Bandes (20) durch zueinander komplementäre Eingriffskonturen (24, 26) zusammengehalten sind

3. Freilauf nach Anspruch 1 oder 2, **dadurch gekennzeichnet, daß** die Klemmkonturen (16) durch Walzen des flachen Bandes (20) hergestellt sind, bevor dieses zu der Hülse (10) gebogen wird.

4. Freilauf nach einem der Ansprüche 1 bis 3, **dadurch gekennzeichnet, daß** das Band (20) ein Stanzteil ist.

5. Freilauf nach dem Oberbegriff des Anspruchs 1 oder nach einem der vorstehenden Ansprüche, **dadurch gekennzeichnet, daß** der Käfig (12) durch zwei als getrennte Formteile hergestellte Hälften (28, 30) gebildet wird, die von entgegengesetzten Enden her in die Hülse (10) eingerastet sind.

6. Freilauf nach Anspruch 5, **dadurch gekennzeichnet, daß** die Hälften (28, 30) des Käfigs (12) an den einander zugewandten inneren Enden radial nach außen vorspringende Rastnocken (34) tragen, die in zugehörige fensterartige Aussparungen (36) der Hülse (10) eingreifen.

7. Freilauf nach Anspruch 6, **dadurch gekennzeichnet, daß** jedem Wälzkörper (14) ein Paar von Rastnocken (34) zugeordnet ist, die an je einer Hälfte (28, 30) des Käfigs ausgebildet sind und in eine gemeinsame fensterartige Aussparung (36) der Hülse (10) eingreifen.

8. Freilauf nach einem der Ansprüche 5 bis 7, **dadurch gekennzeichnet, daß** die Hälften (28, 30) des Wälzlagers (12) an den einander entgegengesetzten äußeren Enden mehrere radial nach außen vorspringende Nocken (38) aufweisen, die, in Umfangsrichtung im wesentlichen spielfrei, in zugehörige Kerben (40) am Rand der Hülse (10) eingreifen.

9. Freilauf nach dem Oberbegriff des Anspruchs 1 oder nach einem der vorstehenden Ansprüche, **dadurch gekennzeichnet, daß** den einzelnen Wälzkörpern (14) zugeordnete Federn (18) einstückig an den Käfig (12) aus Kunststoff angeformt sind.

10. Freilauf nach den Ansprüchen 5 und 9, **dadurch gekennzeichnet, daß** die Wälzkörper zylindrische Nadeln (14) sind und daß jede Hälfte (28, 30) des Käfigs (12) je eine Feder (18) für jede der Nadeln (14) bildet.

11. Freilauf nach Anspruch 10, **dadurch gekennzeichnet, daß** die beiden Hälften (28, 30) des Käfigs (12) unterschiedlich gefärbt sind.
